# EUROPÄISCHE PATENTSCHRIFT

(11) **EP 4 200 972 B1**
(45) Veröffentlichungstag und Bekanntmachung des Hinweises auf die Patenterteilung: **01.05.2024**
(21) Anmeldenummer: 21778420.6
(22) Anmeldetag: 17.09.2021
(51) Int. Cl.: H02P 29/032

(54) **VERFAHREN UND SYSTEM ZUR STEUERUNG EINER DYNAMOELEKTRISCHEN MASCHINE**
METHOD AND SYSTEM FOR CONTROLLING AN ELECTRIC MACHINE
PROCÉDÉ ET SYSTÈME DE COMMANDE D'UNE MACHINE ÉLECTRIQUE

(30) Priorität: 05.11.2020 EP 20205978
(43) Veröffentlichungstag der Anmeldung: 28.06.2023
(73) Patentinhaber: Siemens Aktiengesellschaft, 80333 München (DE)
(72) Erfinder: NOLTING, Christoph, 91315 Höchstadt/Aisch (DE); SCHEIBNER, Dirk, 90473 Nürnberg (DE); SCHWABEN, Markus, 97618 Hohenroth-Leutershausen (DE); ZETTNER, Jürgen, 90587 Veitsbronn (DE); BÖHLING, Jürgen, 85221 Dachau (DE); MUELLER, Juergen, 97490 Poppenhausen (DE)
(74) Vertreter: Siemens Patent Attorneys
(86) Internationale Anmeldenummer: PCT/EP2021/075661
(87) Internationale Veröffentlichungsnummer: WO 2022/096186

(56) Entgegenhaltungen:
- DE-A1- 10 015 747
- DE-A1- 19 812 345
- DE-A1-102017 120 652

## Beschreibung

Die Erfindung betrifft ein Verfahren und ein System zur Steuerung einer dynamoelektrischen Maschine.

Elektrische Antriebe, zumeist aufweisend einen Umrichter und eine dynamoelektrische Maschine, sind überwiegend für maximale Aufstellungshöhen von 2000 m MSL konzipiert. Ist eine Aufstellung des Antriebs in größeren Höhen geplant, erfolgt oft ein Derating einer Leistung des Antriebs. Jedoch muss hierbei während einer Projektierung die Aufstellungshöhe bekannt sein.

Es besteht jedoch die Gefahr, dass die Aufstellungshöhe nicht korrekt angegeben wird oder nachträglich verändert wird.

Dies kann sich jedoch nachteilig auf eine Kühlung des Antriebs, insbesondere der Maschine, auswirken und so zu einem Ausfall führen.

Der Erfindung liegt daher die Aufgabe zugrunde, dies zu verbessern. In diesem Zusammenhang sei Dokument DE 10 2017 120652 A1 erwähnt, das ein Verfahren zur Steuerung einer dynamoelektrischen Maschine, insbesondere dynamoelektrischen rotatorischen Maschine, offenbart, mit folgenden Schritten: Ermitteln eines Umgebungsluftdrucks der dynamoelektrischen Maschine mittels einer Vorrichtung zur Luftdruckbestimmung; Anpassen einer Leistung der dynamoelektrischen Maschine in Abhängigkeit des Umgebungsluftdrucks.

Die Lösung der Aufgabe gelingt durch ein Verfahren nach Anspruch 1.

Das Anpassen der Leistung gelingt vorteilhaft mittels einer Belastungskurve und/oder mittels einer Kennlinie und/oder mittels einer Tabelle. Auch andere Formen, die die Leistung mit dem Umgebungsluftdruck in Relation setzen, sind möglich.

Die Erfindung eignet sich besonders gut für dynamoelektrische Maschinen. Jedoch kann die Erfindung auch bei Transformatoren angewendet werden.

Besonders gut geeignet ist die Erfindung für dynamoelektrische rotatorische Maschinen, jedoch ist auch ein Einsatz bei Linearantrieben denkbar.

Vorzugsweise wird hierbei ein aktueller Umgebungsluftruck ermittelt.

Vorzugsweise werden ein Drehmoment und/oder eine Drehzahl der Maschine angepasst.

Erfindungsgemäß wird der Umgebungsluftdruck durch Ermittlung einer Höhenlage bestimmt und/ oder gemessen, beispielsweise mittels eines Höhenmessers. Auch kann hierzu ein globales Navigationssatellitensystem zum Einsatz kommen.

Der Höhenmesser ist hierbei bevorzugt ein barometrischer Höhenmesser. Ferner kann die Höhenlage auch anders bestimmt werden.

Globale Navigationssatellitensysteme sind z. B. NAVSTAR GPS der Vereinigten Staaten von Amerika, GLONASS der Russischen Föderation, Galileo der Europäischen Union und Beidou der Volksrepublik China. Auch andere sind denkbar.

Das globale Navigationssatellitensystem stellt hierbei vorteilhaft zur Bestimmung der Höhenlage eine Information bezüglich einer Position auf der Erdkugel und/oder eine Information bezüglich einer Höhe über dem Meeresspiegel bereit. Vorteilhaft ist zudem eine Ausführungsform, wonach der Umgebungsluftdruck mittels eines Barometers gemessen wird.

Ein Barometer ist ein Messgerät zur Bestimmung eines statischen Absolut-Luftdrucks.

Vorteilhaft ist zudem eine Ausführungsform, wonach eine Umgebungsluftströmung ermittelt wird.

Dies gelingt beispielsweise mittels eines Strömungssensors. Dieser kann einen Luftstrom, insbesondere in Kanälen und an schwer zugänglichen Positionen, messen. Es können wechselnde Strömungsrichtungen oder gerichtete Strömungen erfasst werden.

Es eignet sich mitunter ein Thermoanemometersensor. Auch andere sind denkbar.

Die Umgebungsluftströmung kann ferner auch mit einem Flügelrad-Sensor gemessen werden. Flügelrad-Sensoren können die Luftströmung messen, insbesondere an Auslässen oder auch in Kanälen.

Vorteilhaft ist zudem eine Ausführungsform, wonach eine Umgebungsluftfeuchtigkeit ermittelt wird.

Dies gelingt vorteilhaft mittels eines Feuchtigkeitsmessers. Dieser ist vorteilhaft geeignet, einen Feuchtegehalt in der Luft oder Feststoffen zu messen.

Die Umgebungsluftfeuchtigkeit wird vorzugsweise mit einem Hygrometer ermittelt.

Vorteilhaft ist zudem eine Ausführungsform, wonach eine Umgebungstemperatur ermittelt wird. Hierfür eignet sich z. B. ein Temperatursensor.

Für den Betrieb der Maschine ist von Vorteil, die genauen Umgebungsbedingungen zu kennen. Hierzu zählen die genannten Umgebungsbedingungen wie Umgebungsluftdruck, Umgebungsluftfeuchtigkeit und Umgebungsluftströmung. Ferner ist auch eine Kenntnis über ein Vorhandensein von bestimmten Gasen, insbesondere Schadgasen.

Ein - im Vergleich zu Standardbedingungen - niedrigerer Umgebungsluftdruck reduziert die Kühlung der Maschine, was zu einer Überhitzung führen kann. Auch die Umgebungsluftströmung kann Einfluss auf die Kühlung haben.

Eine hohe Umgebungsluftfeuchtigkeit, auch mit der Gefahr einer Betauung, kann die Funktion eines, z. B. optischen, Gebers beeinträchtigen. Dies kann dazu führen, dass eine Bereitstellung einer Drehzahl-, Kommutierungs- und/oder Lageinformation nicht zuverlässig erfolgt.

Ferner können Schadgase eine Lebensdauer von Isolierstoffen oder Permanentmagneten begrenzen.

In der Maschine, insbesondere in einer Wicklung der Maschine, kann ferner ein weiterer Temperatursensor angeordnet sein.

Vorteilhaft ist zudem eine Ausführungsform, wonach die Leistung der dynamoelektrischen Maschine abhängig vom Umgebungsluftdruck und/oder von der Umgebungsluftströmung und/oder von der Umgebungsluftfeuchtigkeit und/oder von der Umgebungstemperatur angepasst wird.

Dies gelingt vorteilhaft dadurch, dass durch die Belastungskurve bzw. Kennlinie bzw. Tabelle die Leistung der dynamoelektrischen Maschine mit dem Umgebungsluftdruck und/oder mit der Umgebungsluftströmung und/oder mit der Umgebungsluftfeuchtigkeit und/oder mit der Umgebungstemperatur in Beziehung gesetzt wird.

Vorteilhaft ist zudem eine Ausführungsform, wonach eine Leistung der dynamoelektrischen Maschine in Abhängigkeit des Umgebungsluftdrucks und/oder der Umgebungsluftströmung und/oder der Umgebungsluftfeuchtigkeit und/oder der Umgebungstemperatur reduziert wird.

Die Erfindung bietet den Vorteil, dass Kenntnis über die Aufstellungshöhe erlangt wird. Da mit zunehmender Höhe der Luftdruck sowie die Luftdichte sinken, ist mit einer Verschlechterung von Kühleigenschaften und somit einer Überhitzung der Maschine zu rechnen. Darauf kann durch die Erfindung reagiert werden, wodurch ein Schaden der Maschine und/oder ein Ausfall der Maschine vermieden werden kann.

Die Erfindung bietet zudem den Vorteil, dass wetterbedingte Druckschwankungen berücksichtigt werden können.

Ferner nimmt mit zunehmender Höhe eine kosmische Höhenstrahlung zu, was insbesondere für den Betrieb von Leistungshalbleitern wichtig ist. Die Höhenstrahlung hängt dabei neben der Höhe über dem Meeresspiegel auch von einer geografischen Breite ab. Zusätzlich erhöht sich in größerer Höhe die Gefahr für Teilentladungen.

Diese Effekte können durch die Erfindung berücksichtigt werden, da die Leistung der Maschine bedarfsgerecht angepasst werden kann.

Die Lösung der oben gestellten Aufgabe gelingt ferner durch ein System nach Anspruch 10.

Vorteilhaft ist eine Ausführungsform, wonach das System einen Höhenmesser aufweist.

Vorzugsweise wird die Höhe barometrisch, mittels Schall, Laser und/oder Mikrowelle gemessen.

Vorteilhaft ist zudem eine Ausführungsform, wonach das System einen Empfänger zum Empfang einer Information von einem globalen Navigationssatellitensystem aufweist.

Auf diese Weise kann zuverlässig eine Information bezüglich einer Position auf der Erdkugel und/oder bezüglich einer Höhe über dem Meeresspiegel bezogen werden. Auch andere sind denkbar.

Vorteilhaft ist zudem eine Ausführungsform, wonach das System eine Messvorrichtung zur Messung des Umgebungsluftdrucks aufweist.

Hierzu eignet sich besonders gut ein Barometer.

Vorteilhaft ist zudem eine Ausführungsform, wonach das System eine Messvorrichtung zur Messung einer Umgebungsluftströmung aufweist.

Vorteilhafte Messvorrichtungen sind bereits weiter oben beschrieben.

Vorteilhaft ist zudem eine Ausführungsform, wonach das System eine Messvorrichtung zur Messung einer Umgebungsluftfeuchtigkeit aufweist.

Dies ist beispielsweise ein Hygrometer.

Vorteilhaft ist zudem eine Ausführungsform, wonach das System eine Messvorrichtung zur Messung einer Umgebungstemperatur aufweist.

Vorteilhaft ist zudem eine Ausführungsform, wonach die Messvorrichtung zur Messung eines Umgebungsluftdrucks und/oder die Messvorrichtung zur Messung einer Umgebungsluftströmung und/oder die Messvorrichtung zur Messung einer Umgebungsluftfeuchtigkeit und/oder die Messvorrichtung zur Messung einer Umgebungstemperatur wenigstens einen MEMS-Baustein aufweist.

MEMS (Microelektromechanisches System) sind kleine Bauelemente oder Bausteine, die Logikelemente und mikromechanische Strukturen in einem Chip, insbesondre Halbleiterchip, vereinen. Sie können mechanische und/oder elektrische Informationen verarbeiten. MEMS weisen vorteilhaft Silicium auf. Jedoch sind auch andere in der Halbleitertechnik übliche Materialien denkbar.

Strukturen der MEMS können kleiner als ein Mikrometer sein. Dank der Miniaturisierung lassen sie sich wie Halbleiter billig und in Massen fertigen.

MEMS sind zudem robust und zuverlässig. Zudem sind eine geringe Baugröße, ein geringer Preis und ein niedriger Energiebedarf vorteilhaft.

Es ist zudem denkbar, dass anstelle von MEMS oder zusätzlich NEMS (Nanoelektromechanisches System) eingesetzt werden.

Für die oben angeführten Umgebungsbedingungen sind in den Projektierungsvorschriften des Motors Anweisungen enthalten. So gibt es zum Beispiel Angaben für ein Leistungs-Derating in Abhängigkeit der Aufstellhöhe des Motors.

Die Erfindung ist von Vorteil, da ein mit zunehmender Höhe über dem Meeresspiegel ein Atmosphärendruck nach der barometrischen Höhenformel abnimmt. Es muss nicht überwacht werden, ob die bei einer Projektierung angegeben Aufstellhöhe tatsächlich eingehalten wird.

Zudem können auch wetterbedingte Druckschwankungen berücksichtigt werden.

Die Maschine kann so besser ausgenutzt werden.

Im Folgenden wird die Erfindung anhand der in den Figuren dargestellten Ausführungsbeispiele näher beschrieben und erläutert. Es zeigen:
- FIG 1: einen beispielhaften Ablauf des erfindungsgemäßen Verfahrens zur Steuerung einer dynamoelektrischen Maschine, insbesondere dynamoelektrischen rotatorischen Maschine,
- FIG 2: eine mögliche Ausführung des erfindungsgemäßen Systems,
- FIG 3: eine weitere mögliche Ausführung des erfindungsgemäßen Systems,
- FIG 4: eine beispielhafte Belastungskurve.

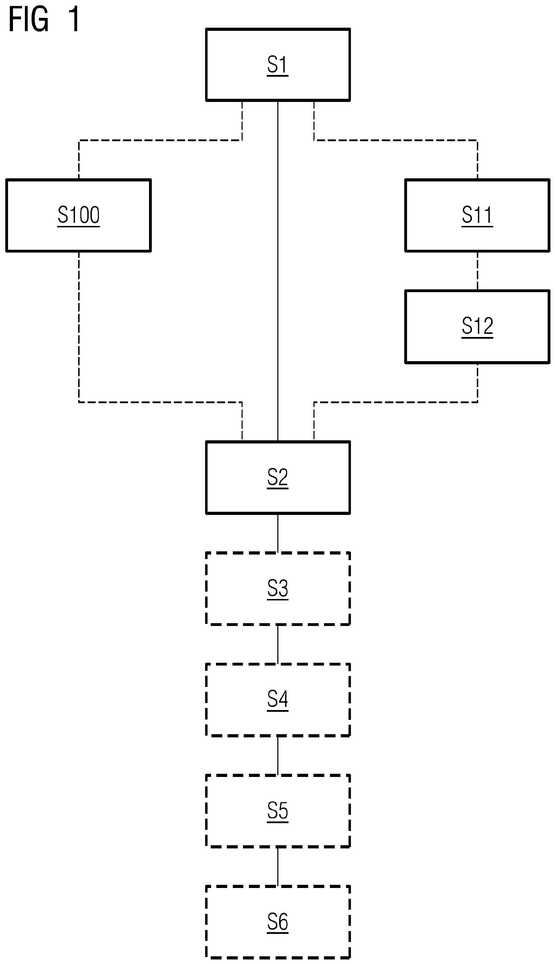

FIG 1 zeigt einen beispielhaften Ablauf des erfindungsgemäßen Verfahrens zur Steuerung einer dynamoelektrischen Maschine, insbesondere dynamoelektrischen rotatorischen Maschine.

Die dynamoelektrische Maschine 3 ist vorteilhaft ein Motor oder ein Generator.

In einem Verfahrensschritt S1 erfolgt eine Ermittlung eines Umgebungsluftdrucks der dynamoelektrischen Maschine mittels einer Vorrichtung zur Luftdruckbestimmung. Vorteilhaft wird der aktuelle, an einem Aufstellort der dynamoelektrischen Maschine vorliegende Umgebungsluftdruck ermittelt.

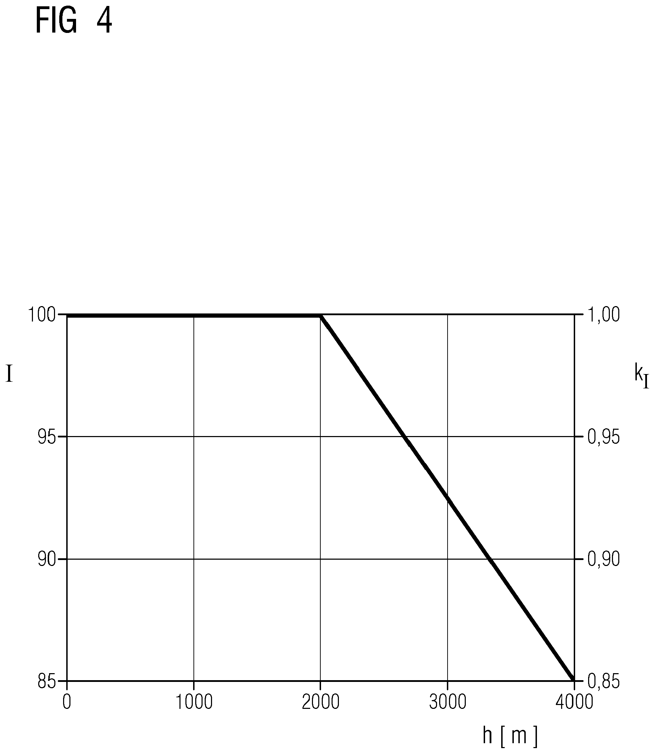

In einem Verfahrensschritt S2 wird eine Leistung der dynamoelektrischen Maschine, z. B. anhand einer Belastungskurve (siehe FIG 4), insbesondere an vorliegende Umgebungsbedingungen, angepasst.

Anstelle der Belastungskurve kann auch eine Kennlinie, Tabelle, etc. angewendet werden.

Die Umgebungsbedingungen sind neben dem bereits erläuterten Umgebungsluftdruck vorteilhaft eine Umgebungsluftströmung und/oder eine Umgebungsluftfeuchtigkeit und/oder eine Umgebungstemperatur.

Ferner können auch Gase, insbesondere Schadgase, detektiert werden.

Die Ermittlung des Umgebungsluftdrucks gelingt z. B. durch die Verfahrensschritte S11 und S12, wonach in Verfahrensschritt S11 eine Höhenlage der dynamoelektrischen Maschine mittels eines Höhenmessers oder durch ein globales Navigationssatellitensystem bestimmt wird. In Verfahrensschritt S12 erfolgt eine Bestimmung des Umgebungsluftdrucks auf Basis der Höhenlage.

Ein Luftdruck in einer Höhe ist im Wesentlichen konstant über die Erdkugel. Bei der Ermittlung der Höhenlage durch ein globalen Navigationssatellitensystem wird vorteilhaft ein Standort ermittelt und daraus auf den Aufstellort und die Höhenlage geschlossen.

Die Ermittlung des Umgebungsluftdrucks gelingt z. B. auch durch einen Verfahrensschritt S100, wonach der Umgebungsluftdruck gemessen wird, insbesondere mittels eines Barometers.

In einem Verfahrensschritt S3 wird eine Umgebungsluftströmung ermittelt.

In einem Verfahrensschritt S4 wird eine Umgebungsluftfeuchtigkeit ermittelt.

In einem Verfahrensschritt S5 wird eine Umgebungstemperatur ermittelt.

In einem Verfahrensschritt S6 wird die Leistung der dynamoelektrischen Maschine anhand der Belastungskurve reduziert.

Durch die beispielhafte Belastungskurve oder andere Formen wird die Leistung der dynamoelektrischen Maschine mit dem Umgebungsluftdruck und/oder mit der Umgebungsluftströmung und/oder mit der Umgebungsluftfeuchtigkeit und/oder mit der Umgebungstemperatur in Beziehung gesetzt.

Ferner ist eine Detektion von Gasen möglich. Dies sind vorzugsweise alkalische Gase und/oder saure Gase, wie beispielsweise Ammoniak, Säurenebel und Schwefelsäure.

Auch saurer Regen kann detektiert werden.

Denkbar ist hierbei eine Ausgabe einer Warnung.

Die Bestimmung der genannten Größen ist von Vorteil, da diese zu einer Beschädigung des Systems führen können.

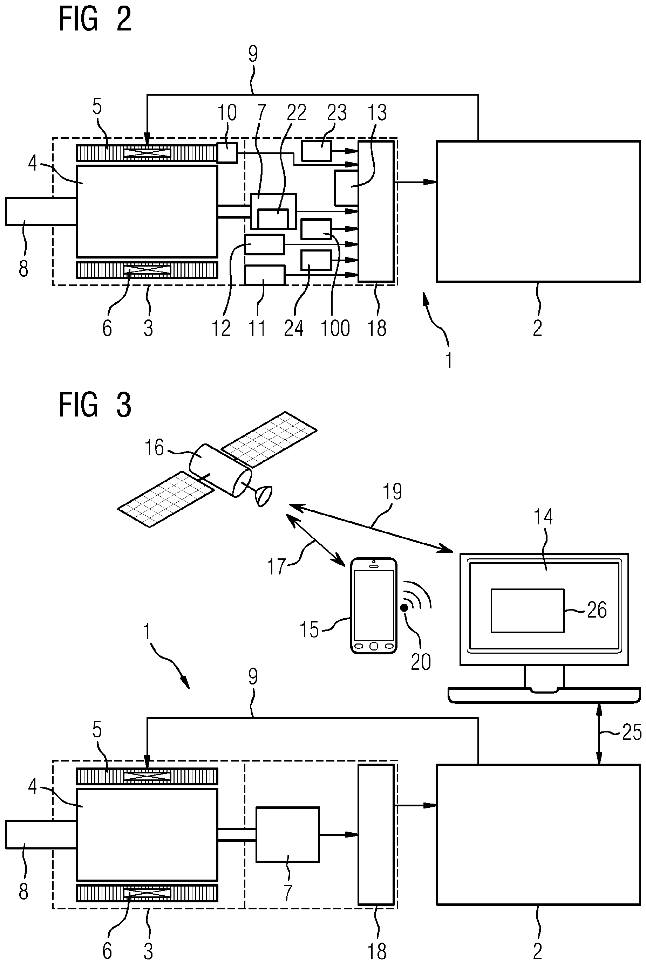

FIG 2 zeigt eine mögliche Ausführung des erfindungsgemäßen Systems 1.

Die Figur zeigt einen Umrichter 2 sowie eine dynamoelektrische rotatorische Maschine 3. Diese Ausführung ist bevorzugt, jedoch eignet sich die Erfindung auch für Linearantriebe oder Transformatoren.

Der Umrichter 2 weist vorteilhaft eine Steuereinheit auf oder ist mit einer Steuereinheit verbunden.

Eine Funktion zur Anpassung der Leistung der dynamoelektrischen Maschine 3, z. B. anhand der Belastungskurve, ist vorteilhaft im Umrichter 2 bzw. der Steuereinheit vorhanden.

In der Funktion sind vorteilhaft Steuerungs- und/oder Regelungsalgorithmen umfasst, die eine Anpassung, insbesondere ein Derating, ermöglichen.

Die abgebildete Maschine 3 weist einen Rotor 4 und einen Stator 5 auf. Der Stator weist ein Wicklungssystem 6 auf.

Das System 1 weist einen Positionssensor 7 auf, welcher an einer Welle 8 angeordnet ist. Der Positionssensor 7 ist z. B. ein Geber oder in einem Geber integriert. Der Geber ist vorteilhaft ein Drehgeber oder Winkelgeber.

Der Positionssensor weist vorteilhaft einen MEMS-Baustein 12 auf.

Die Figur zeigt, dass die Maschine 3, insbesondere das Wicklungssystem 6, vom Umrichter 2 mit elektrischer Energie gespeist wird (dargestellt durch Pfeil 9).

Die Figur zeigt einen Höhenmesser 100.

Am Stator 5 ist ein Temperatursensor 10 angeordnet. Dieser ist vorteilhaft zur Erfassung einer Temperatur des Wicklungssystems 6 ausgebildet.

Die Figur zeigt eine Messvorrichtung zur Messung des Umgebungsluftdrucks 11. Die Messvorrichtung 11 weist vorteilhaft einen MEMS-Baustein auf.

Die Figur zeigt eine Messvorrichtung zur Messung der Umgebungsluftfeuchtigkeit 13. Die Messvorrichtung 13 weist vorteilhaft einen MEMS-Baustein auf.

Die Figur zeigt eine Messvorrichtung zur Messung des Umgebungsluftströmung 22. Die Messvorrichtung 22 weist vorteilhaft einen MEMS-Baustein auf.

Die Figur zeigt eine Messvorrichtung zur Messung der Umgebungstemperatur 23. Die Messvorrichtung 23 weist vorteilhaft einen MEMS-Baustein auf.

Die Figur zeigt eine Messvorrichtung zur Messung von Gasen 24. Die Messvorrichtung 24 weist vorteilhaft einen MEMS-Baustein auf.

Die beschriebenen Messvorrichtungen sind beispielsweise als Sensoren ausgebildet. Sie können auf einer Leiterplatte 18, insbesondere als Printed Circuit Board (kurz: PCB) ausgebildet, angeordnet sein. Ferner können sie auch zur Leiterplatte 18 beabstandet angeordnet sein. Vorteilhaft sind sie jedoch zur Übermittlung von Informationen an die Leiterplatte 18 ausgebildet.

Die Leiterplatte 18 dient als Schnittstelle und ist vorteilhaft zur Weitergabe von Informationen an den Umrichter 2 bzw. die Steuereinheit ausgebildet.

Es ist zudem möglich, die beschriebenen Messvorrichtungen bzw. Sensoren in einem Kombinationssensor zu vereinen.

Die Figur zeigt beispielhaft eine Mehrzahl an Sensoren und Messvorrichtungen. Es werden zur Durchführung des erfindungsgemäßen Verfahrens nicht alle genannten Sensoren und Messvorrichtungen benötigt.

FIG 3 zeigt eine weitere mögliche Ausführung des erfindungsgemäßen Systems 1.

Die Figur zeigt im Wesentlichen das in FIG 2 beschriebene System 1.

Das System 1 ist zum Datenaustausch (mit Pfeil 25 dargestellt) mit einer externen Recheneinheit 14 ausgebildet. Die Recheneinheit kann auch im Umrichter 2 integriert sein.

Die Recheneinheit weist einen Empfänger 26 zum Empfang (mit Pfeil 19 dargestellt) einer Information von einem globalen Navigationssatellitensystem 16 auf. Auf diese Weise kann zuverlässig eine Information bezüglich einer Position auf der Erdkugel und/oder bezüglich einer Höhe über dem Meeresspiegel bezogen werden.

Alternativ oder zusätzlich kann auch ein Smartphone 15 die Information bezüglich der Position auf der Erdkugel und/oder bezüglich der Höhe über dem Meeresspiegel beziehen (mit Pfeil 17 dargestellt).

Dies gelingt vorteilhaft mittels einer App. Das Smartphone 15 muss hierbei nicht dauerhaft in der Nähe des Systems 1 verbleiben. Ein Bezug der Information bezüglich der Position auf der Erdkugel und/oder bezüglich der Höhe über dem Meeresspiegel ist vorteilhaft bei einer Inbetriebnahme des Systems 1 erforderlich.

Diese Information kann anschließend an die Recheneinheit 14 übermittelt werden. Dies gelingt beispielsweise mittels einer drahtlosen bzw. kabellosen Verbindung 20.

Die in FIG 2 beschriebenen Sensoren und Messvorrichtungen können auch im in FIG 3 dargestellten System 1 vorhanden sein.

Die Vorrichtung zur Luftdruckbestimmung kann somit einerseits eine Messvorrichtung sein, die den Umgebungsluftdruck direkt bestimmt, z. B. ein Barometer. Die Vorrichtung zur Luftdruckbestimmung kann jedoch auch ein Gerät sein, welches die Höhenlage bestimmt, insbesondere mittels Satelliteninformationen, und daraus - sozusagen indirekt - den Umgebungsluftdruck bestimmt.

FIG 4 zeigt eine beispielhafte Belastungskurve.

Die x-Achse zeigt eine Aufstellhöhe h in Metern m der dynamoelektrischen Maschine über dem Meeresspiegel.

Auf der y-Achse ist ein zulässiger Dauerstrom in % des Nennstroms dargestellt sowie ein Derating-Faktor k_{I}, welcher Aufschluss über eine Reduzierung der Leistung der dynamoelektrischen Maschine gibt.

Die Belastungskurve zeigt, dass ab einer Aufstellhöhe von 2000 m MSL eine Reduktion des zulässigen Dauerstroms erfolgt, insbesondere um eine ausreichende Kühlung der Maschine zu gewährleisten und so einen Schaden an der Maschine zu vermeiden.

Die Erfindung ist z. B. von Vorteil für Lifte und andere Beförderungsvorrichtungen, Pumpen, insbesondere Pumpen im Gebirge, Züge und andere Elektrofahrzeuge, die in großen Höhen unterwegs sind. Die Erfindung ist auch von Vorteil für Bergbau- und Industriemotoren. Auch andere Anwendungsgebiete sind denkbar.

## Patentansprüche

1. Verfahren zur Steuerung einer dynamoelektrischen Maschine (3), insbesondere dynamoelektrischen rotatorischen Maschine, mit folgenden Schritten:
- Ermitteln eines Umgebungsluftdrucks der dynamoelektrischen Maschine (3) mittels einer Vorrichtung zur Luftdruckbestimmung (11, 15),
- Anpassen einer Leistung der dynamoelektrischen Maschine (3) in Abhängigkeit des Umgebungsluftdrucks, **dadurch gekennzeichnet, dass** damit einem mit zunehmender Aufstellhöhe sinkenden Luftdruck und einer damit einhergehenden Verschlechterung von Kühleigenschaften entgegengewirkt wird, derart, dass eine ausreichende Kühlung der Maschine gewährleistet ist,
wobei der Umgebungsluftdruck durch Ermittlung einer Höhenlage bestimmt wird und/oder wobei der Umgebungsluftdruck gemessen wird, insbesondere mittels eines Barometers.

2. Verfahren nach Anspruch 1, wobei die Höhenlage mittels eines Höhenmessers oder durch ein globales Navigationssatellitensystem (16) bestimmt wird.

3. Verfahren nach einem der vorhergehenden Ansprüche, wobei eine Umgebungsluftströmung ermittelt wird, wobei die Umgebungsluftströmung Einfluss auf die Kühlung der Maschine hat.

4. Verfahren nach einem der vorhergehenden Ansprüche, wobei eine Umgebungsluftfeuchtigkeit ermittelt wird, um eine Beeinträchtigung eines Gebers durch eine hohe Umgebungsluftfeuchtigkeit zu erkennen.

5. Verfahren nach einem der vorhergehenden Ansprüche, wobei eine Umgebungstemperatur ermittelt wird.

6. Verfahren nach einem der vorhergehenden Ansprüche, wobei die Leistung der dynamoelektrischen Maschine (3) abhängig vom Umgebungsluftdruck und/oder von der Umgebungsluftströmung und/oder von der Umgebungsluftfeuchtigkeit und/oder von der Umgebungstemperatur angepasst wird.

7. Verfahren nach einem der vorhergehenden Ansprüche, wobei eine Leistung der dynamoelektrischen Maschine (3) in Abhängigkeit des Umgebungsluftdrucks und/oder der Umgebungsluftströmung und/oder der Umgebungsluftfeuchtigkeit und/oder der Umgebungstemperatur reduziert wird.

8. System (1) zur Steuerung einer dynamoelektrischen Maschine (3), insbesondere dynamoelektrischen rotatorischen Maschine, zur Durchführung eines Verfahrens nach einem der Ansprüche 1 bis 7, aufweisend:
- eine dynamoelektrische Maschine (3), insbesondere dynamoelektrische rotatorische Maschine,
- eine Vorrichtung zur Luftdruckbestimmung,
- eine Funktion zur Anpassung einer Leistung der dynamoelektrischen Maschine (3), um einem mit zunehmender Aufstellhöhe sinkenden Luftdruck und einer damit einhergehenden Verschlechterung von Kühleigenschaften entgegenzuwirken und eine ausreichende Kühlung der Maschine zu gewährleisten.

9. System (1) nach Anspruch 8, aufweisend einen Höhenmesser (100) .

10. System (1) nach einem der Ansprüche 8 oder 9, aufweisend einen Empfänger (15, 26) zum Empfang einer Information von einem globalen Navigationssatellitensystem (16).

11. System (1) nach einem der Ansprüche 8 bis 10, aufweisend eine Messvorrichtung (11) zur Messung des Umgebungsluftdrucks.

12. System (1) nach einem der Ansprüche 8 bis 11, aufweisend eine Messvorrichtung (22) zur Messung einer Umgebungsluftströmung, wobei die Umgebungsluftströmung Einfluss auf die Kühlung der Maschine hat.

13. System (1) nach einem der Ansprüche 8 bis 12, aufweisend eine Messvorrichtung (13) zur Messung einer Umgebungsluftfeuchtigkeit um eine Beeinträchtigung eines Gebers durch eine hohe Umgebungsluftfeuchtigkeit zu erkennen.

14. System (1) nach einem der Ansprüche 8 bis 13, aufweisend eine Messvorrichtung (23) zur Messung einer Umgebungstemperatur.

15. System (1) nach einem der Ansprüche 11 bis 14, wobei die Messvorrichtung (11) zur Messung eines Umgebungsluftdrucks und/oder die Messvorrichtung (22) zur Messung einer Umgebungsluftströmung und/oder die Messvorrichtung (13) zur Messung einer Umgebungsluftfeuchtigkeit und/oder die Messvorrichtung (23) zur Messung einer Umgebungstemperatur wenigstens einen MEMS-Baustein aufweist.

## Claims

1. Method for controlling a dynamoelectric machine (3), in particular a dynamoelectric rotary machine, comprising the following steps:
- ascertaining an ambient air pressure of the dynamoelectric machine (3) by means of an apparatus for determining air pressure (11, 15),
- adapting a power output of the dynamoelectric machine (3) as a function of the ambient air pressure, **characterised in that** this counteracts an air pressure which drops as installation altitude rises and an associated deterioration of cooling properties, such that a sufficient cooling of the machine is ensured, wherein the ambient air pressure is determined by ascertaining an altitude and/or wherein the ambient air pressure is measured, in particular by means of a barometer.

2. Method according to claim 1, wherein the altitude is determined by means of an altimeter or by means of a global navigation satellite system (16).

3. Method according to one of the preceding claims, wherein an ambient air flow is ascertained, wherein the ambient air flow has influence on the cooling of the machine.

4. Method according to one of the preceding claims, wherein an ambient air humidity is ascertained, in order to identify an impairment of an encoder due to a high ambient air humidity.

5. Method according to one of the preceding claims, wherein an ambient temperature is ascertained.

6. Method according to one of the preceding claims, wherein the power output of the dynamoelectric machine (3) is adapted as a function of the ambient air pressure and/or the ambient air flow and/or the ambient air humidity and/or the ambient temperature.

7. Method according to one of the preceding claims, wherein a power output of the dynamoelectric machine (3) is reduced as a function of the ambient air pressure and/or the ambient air flow and/or the ambient air humidity and/or the ambient temperature.

8. System (1) for controlling a dynamoelectric machine (3), in particular a dynamoelectric rotary machine, for carrying out a method according to one of claims 1 to 7, having:
- a dynamoelectric machine (3), in particular a dynamoelectric rotary machine,
- an apparatus for determining air pressure,
- a function for adapting a power output of the dynamoelectric machine (3), in order to counteract an air pressure which drops as installation altitude rises and an associated deterioration of cooling properties, and to ensure a sufficient cooling of the machine.

9. System (1) according to claim 8, having an altimeter (100).

10. System (1) according to one of claims 8 or 9, having a receiver (15, 26) for receiving information from a global navigation satellite system (16).

11. System (1) according to one of claims 8 to 10, having a measuring apparatus (11) for measuring the ambient air pressure.

12. System (1) according to one of claims 8 to 11, having a measuring apparatus (22) for measuring an ambient air flow, wherein the ambient air flow has influence on the cooling of the machine.

13. System (1) according to one of claims 8 to 12, having a measuring apparatus (13) for measuring an ambient air humidity, in order to identify an impairment of an encoder due to a high ambient air humidity.

14. System (1) according to one of claims 8 to 13, having a measuring apparatus (23) for measuring an ambient temperature.

15. System (1) according to one of claims 11 to 14, wherein the measuring apparatus (11) for measuring an ambient air pressure and/or the measuring apparatus (22) for measuring an ambient air flow and/or the measuring apparatus (13) for measuring an ambient air humidity and/or the measuring apparatus (23) for measuring an ambient temperature has at least one MEMS component.

## Revendications

1. Procédé de commande d'une machine (3) dynamoélectrique, en particulier d'une machine dynamoélectrique tournante, comprenant les stades suivants :
- recherche d'une pression de l'air ambiant de la machine (3) dynamoélectrique au moyen d'un dispositif de détermination (11, 15) de la pression de l'air,
- adaptation d'une puissance de la machine (3) dynamoélectrique, en fonction de la pression de l'air ambiant, **caractérisé en ce qu'**ainsi on s'oppose à une pression de l'air s'abaissant avec une élévation de l'altitude d'implantation et à une dégradation ainsi inhérente des propriétés de refroidissement, de manière à assurer un refroidissement suffisant de la machine,
dans lequel on détermine la pression de l'air ambiant par recherche de la position en altitude et/ou dans lequel on mesure la pression de l'air ambiant, en particulier au moyen d'un baromètre.

2. Procédé suivant la revendication 1, dans lequel on détermine la position en altitude au moyen d'un dispositif de mesure de l'altitude ou par un système (16) global de satellite de navigation.

3. Procédé suivant l'une des revendications précédentes, dans lequel on détermine un courant d'air ambiant, dans lequel le courant d'air ambiant a de l'influence sur le refroidissement de la machine.

4. Procédé suivant l'une des revendications précédentes, dans lequel on détermine une humidité de l'air ambiant, afin de détecter une atteinte portée à un capteur par une grande humidité de l'air ambiant.

5. Procédé suivant l'une des revendications précédentes, dans lequel on détermine une température ambiante.

6. Procédé suivant l'une des revendications précédentes, dans lequel on adapte la puissance de la machine (3) dynamoélectrique, en fonction de la pression de l'air ambiant et/ou d'un courant de l'air ambiant et/ou de l'humidité de l'air ambiant et/ou de la température ambiante.

7. Procédé suivant l'une des revendications précédentes, dans lequel on réduit une puissance de la machine (3) dynamoélectrique, en fonction de l'air ambiant et/ou du courant de l'air ambiant et/ou de l'humidité de l'air ambiant et/ou de la température ambiante.

8. Système (1) de commande d'une machine (3) dynamoélectrique, en particulier d'une machine dynamoélectrique tournante, pour effectuer un procédé suivant l'une des revendications 1 à 7, comportant :
- une machine (3) dynamoélectrique, en particulier une machine dynamoélectrique tournante,
- un dispositif de détermination de la pression de l'air,
- une fonction d'adaptation d'une puissance de la machine (3) dynamoélectrique, afin de s'opposer à un abaissement de la pression de l'air avec une altitude croissante d'installation et à une dégradation ainsi inhérente des propriétés de refroidissement et à assurer un refroidissement suffisant de la machine.

9. Système (1) suivant la revendication 8, comprenant un dispositif (100) de mesure de l'altitude.

10. Système (1) suivant l'une des revendications 8 ou 9, comportant un récepteur (15, 26) de réception d'une information d'un système (16) global de satellite de navigation.

11. Système (1) suivant l'une des revendications 8 à 10, comportant un dispositif (11) de mesure pour la mesure de la pression de l'air ambiant.

12. Système (1) suivant l'une des revendications 8 à 11, comportant un dispositif (22) de mesure de mesure d'un courant d'air ambiant, dans lequel le courant d'air ambiant a de l'influence sur le refroidissement de la machine.

13. Système (1) suivant l'une des revendications 8 à 12, comportant un dispositif (13) de mesure, pour la mesure de l'humidité de l'air ambiant, afin de détecter qu'il est porté atteinte à un capteur par une grande humidité de l'air ambiant.

14. Système (1) suivant l'une des revendications 8 à 13, comportant un dispositif (23) de mesure pour la mesure d'une température ambiante.

15. Système (1) suivant l'une des revendications 11 à 14, dans lequel le dispositif (11) de mesure a au moins un module MEMS pour la mesure de la pression de l'air ambiant et/ou le dispositif (22) de mesure a au moins un module MEMS pour la mesure d'un courant d'air ambiant et/ou le dispositif (13) de mesure a au moins un module MEMS pour la mesure de l'humidité de l'air ambiant et/ou le dispositif (23) de mesure a au moins un module MEMS pour la mesure d'une température ambiante.
